# EUROPEAN PATENT SPECIFICATION

(11) **EP 4 403 337 B1**
(45) Date of publication and mention of the grant of the patent: **22.04.2026**
(21) Application number: 23857587.2
(22) Date of filing: 25.07.2023
(51) Int. Cl.: B29C 65/14, H01M 50/105, H01M 50/169, H01M 50/183, B29L 31/34

(54) **SEALING DEVICE FOR POUCH-TYPE SECONDARY BATTERY**
SIEGELVORRICHTUNG FÜR BEUTELARTIGE SEKUNDÄRBATTERIE
DISPOSITIF DE SCELLAGE POUR BATTERIE SECONDAIRE DE TYPE POCHE

(30) Priority: 24.08.2022 KR 20220106088
(43) Date of publication of application: 24.07.2024
(73) Proprietor: LG Energy Solution, Ltd., Seoul 07335 (KR)
(72) Inventor: YOON, Seong Jae, Daejeon 34122 (KR); BAEK, Ju Hwan, Daejeon 34122 (KR); LEE, Jin Soo, Daejeon 34122 (KR); LEE, Seung Bae, Daejeon 34122 (KR); JO, Kwang Un, Daejeon 34122 (KR)
(74) Representative: Goddar, Heinz J.
(86) International application number: PCT/KR2023/010720
(87) International publication number: WO 2024/043551

(56) References cited:
- WO-A1-2022/108194
- KR-A- 20120 056 316
- KR-A- 20130 008 473
- KR-A- 20210 156 516
- KR-A- 20210 156 516
- KR-A- 20220 068 815
- KR-B1- 101 216 423
- KR-B1- 102 252 162
- KR-B1- 102 252 162

## Description

### [Technical Field]

The present invention relates to a sealing device used during case sealing in the manufacture of a pouch-type secondary battery.

### [Background Technology of the Invention]

The demand for high-capacity and high-density batteries is increasing as devices that use batteries has become diversified. Among them, lithium secondary batteries with high energy density and discharge voltage have been commercialized and used in various forms.

Lithium secondary batteries are classified into cylindrical secondary batteries, prismatic secondary batteries, and pouch-type secondary batteries according to their shape. Among them, pouch-type secondary batteries are being researched in various fields because they can be made into high-capacity, high-density secondary batteries by adjusting the thickness of the aluminum laminate sheet and can have various shapes.

Regarding the pouch-type secondary batteries, an aluminum laminated sheet is typically molded to form a storing part, an electrode assembly is stored in the storing part, and the periphery of the storing part is sealed. In order to seal the periphery of the storing part to form a sealing part, a conventional sealing device for a pouch-type secondary battery performs pressurization and heating with a single member.

In a conventional sealing device for a pouch-type secondary battery, a sealing part of a pouch-type secondary battery case including a laminated sheet made of an outer resin layer, a metal layer, and an inner sealant layer is arranged with the inner sealant layer facing each other, and is sealed by placing it between pressurizing parts that can simultaneously heat and pressurize. However, the sealing device has the problem that it takes a lot of time for heat to be transferred from the outer resin layer to the inner sealant layer and causes damage to the outer resin layer.

To solve these problems, a method for sealing a pouch-type secondary battery using a laser has been developed. The sealing device for a pouch-type secondary battery, like the sealing device for a pouch-type secondary battery according to the prior art, arranges a sealing part of a pouch-type case including an outer resin layer, a metal layer, and an inner sealant layer with the inner sealant layer facing each other, and places it between the pressurizing parts.

Here, the pressurizing part is characterized in that it is made of an infrared transmitting material and has an infrared irradiation part in the upper part. In addition, the infrared irradiation part rapidly heats only the metal layer of the sealing part of the pouch-type case and melts the inner sealant layer by the heated metal layer, thereby improving the sealing force while reducing the damage to the outer resin layer caused by conventional heat.

However, the sealing device for a pouch-type secondary battery has a limitation that the power of the laser must be high to heat the metal layer disposed between the outer resin layer and the inner sealant layer. In addition, uneven heating of the pressurizing part may result in uneven sealing or quality imbalances such as wrinkles in the laminated sheet comprising the pouch-type case. If the laser power is increased to solve this problem, the low compressive strength of the pressurizing part may cause the pressurizing part to break when pressurized in a heated state.

Therefore, there is a need to develop a sealing device for a pouch-type secondary battery and a method for manufacturing pouch-type secondary battery using the sealing device that can uniformly and safely seal the sealing part of a pouch-type secondary battery case.

### [Prior Art Document]

Korean Patent Publication No. 10-2021-0156516
KR 102252162 B1 discloses a method and device for sealing a pouch using laser light and glass light guide plate.
KR 101216423 B1 discloses a method of manufacturing a secondary battery by heat sealing with an electrode assembly embedded in a pouch-shaped battery case, wherein sealant layers are in close contact with each other and are irradiated with infrared rays to a sealing site, which is an outer circumferential face of the electrode assembly housing unit.
WO2022/108194 A1 discloses a method for manufacturing a pouch-type secondary battery comprising a first sealing step of using a lead film attached to an electrode lead of an electrode assembly to a sealing part of a pouch in which the electrode assembly is accommodated, and a second sealing step of sealing the sealing part of the pouch.

### [Description of the Invention]

### [Technical Problem]

Accordingly, it is an object of the present invention to provide a sealing device for a pouch-type secondary battery capable of uniformly and safely sealing a sealing part of a pouch-type secondary battery case, and a method for manufacturing a secondary battery using the sealing device.

### [Technical Solution]

To address the problems described above, in an exemplary embodiment, the present invention provides a sealing device for a pouch-type secondary battery including:
a pressurizing part configured to contact at least an upper surface or a lower surface of a sealing part of a pouch-type case; and
a light source part for irradiating light to the pressurizing part,
wherein the pressurizing part is made of a material through which light irradiated from the light source part is transmissible and includes a first light transmitting material satisfying Formula 1 below:

   [Formula 1] 15≤TC₁ₛₜ/RI₁ₛₜ≤35

   in Formula 1,
   TC₁ₛₜ represents a thermal conductivity (unit: W/m·K) of the first light transmitting material,
   RI₁ₛₜ represents a refractive index of a light of the first light transmitting material with a wavelength of 980 nm,
   wherein the pressurizing part comprises a sealing unit that heats and pressurizes the sealing part of the pouch-type case by contacting the sealing part of the pouch-type case; and a lens unit positioned between the light source part and the sealing unit to concentrate light irradiated from the light source part into the sealing unit,
   wherein the sealing unit comprises the first light transmitting material.

Here, the first light transmitting material may have a refractive index of 1.45 to 1.9 for a light having a wavelength of 980 nm, and may have a Mohs hardness of 8.0 or greater.

Moreover, the lens unit may include one or more among a first light transmitting material and a second light transmitting material, and the second light transmitting material may satisfy Formula 2:

[Formula 2] 0.5≤TC_{2nd}/RI_{2nd}≤2

in Formula 2,
TC_{2nd} represents a thermal conductivity (unit: W/m·K) of the second light transmitting material,
RI_{2nd} represents a refractive index of a light of the second light transmitting material with a wavelength of 980 nm.

Here, the second light transmitting material has a refractive index of 1.40 to 1.60 for light having a wavelength of 980 nm.

In addition, the lens unit may be a cylinder lens.

In this case, the lens unit may include a first light transmitting material and a second light transmitting material, and the first light transmitting material and the second light transmitting material may have a structure that is symmetrical with respect to a center line including a cross-sectional center of the lens unit.

Meanwhile, the light source part may irradiate light having a wavelength of 750 nm to 1,000 nm.

In addition, in an exemplary embodiment, the present invention provides a manufacturing method of a pouch-type secondary battery using the sealing device of the present invention including:
storing an electrode assembly and electrolyte in a pouch-type case comprising a laminated sheet including a metal layer and an inner sealant layer, and including a storing part for storing the electrode assembly and a sealing part surrounding the storing part;
disposing the sealing device on at least one point among an upper part and a lower part of the sealing part of the pouch-type case; and
sealing a sealing part of a pouch-type case by pressurizing it while irradiating light from the light source part of the sealing device to a pressurizing part.

### [Advantageous Effects]

A sealing device for a pouch-type secondary battery according to the present invention includes a light source part for irradiating light and a pressurizing part for heating and pressurizing a sealing part of a pouch-type case using light irradiated by the light source part, but has a configuration in which a first light transmitting material having a high thermal conductivity and a high light refractive index is applied to a sealing unit of the pressurizing part that contacts the sealing part of the pouch-type case. Accordingly, the sealing device is capable of uniformly heating and sealing the sealing part of the pouch-type case, and it is possible to prevent damage of the sealing unit heated to a high temperature during sealing, so that the quality of the secondary battery can be improved, and at the same time, it has the advantage of improving processability and economy.

### [Brief Description of the Drawings]

FIG. 1 is a schematic perspective view of a sealing process of a pouch-type secondary battery using a light source part and a pressurizing part of a sealing device according to the present invention.
FIG. 2(a)-(d) is a cross-sectional view illustrating a cross-sectional structure of a first light transmitting material and a second light transmitting material in a lens unit including the first light transmitting material and the second light transmitting material.

### [Best Mode for Carrying out the Invention]

The present invention may have various modifications and various examples, and specific examples are illustrated in the drawings and described in detail in the description.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

Hereinafter, the present invention will be described in more detail.

### Sealing device for a pouch-type secondary battery

In an exemplary embodiment, the present invention provides a sealing device for a pouch-type secondary battery including:
a pressurizing part located on at least one point among an upper part and a lower part of a sealing part of the pouch-type case; and
a light source part for irradiating light to the pressurizing part,
wherein the pressurizing part made of a material through which light irradiated from the light source part is transmissible and includes a first light transmitting material satisfying Formula 1 below:

   [Formula 1] 15≤TC₁ₛₜ/RI₁ₛₜ≤35

   in Formula 1,
   TC₁ₛₜ represents a thermal conductivity (unit: W/m·K) of the first light transmitting material,
   RI₁ₛₜ represents a refractive index of a light of the first light transmitting material with a wavelength of 980 nm,
   wherein the pressurizing part comprises a sealing unit that heats and pressurizes the sealing part of the pouch-type case by contacting the sealing part of the pouch-type case; and a lens unit positioned between the light source part and the sealing unit to concentrate light irradiated from the light source part into the sealing unit,
   wherein the sealing unit comprises the first light transmitting material.

A sealing device for a pouch-type secondary battery according to the present invention includes a light source part for irradiating light and a pressurizing part for heating and pressurizing a sealing part of a pouch-type case using light irradiated by the light source part, and is characterized in that a first light transmitting material having a high thermal conductivity and a high light refractive index is applied to a sealing unit of the pressurizing part that contacts the sealing part of the pouch-type case. Accordingly, the sealing device can not only heat and seal the sealing part of the pouch-type case uniformly, but also prevent damage of the sealing unit heated to a high temperature during sealing, so that the quality of the secondary battery can be improved, and at the same time has the advantage of improving processability and economy.

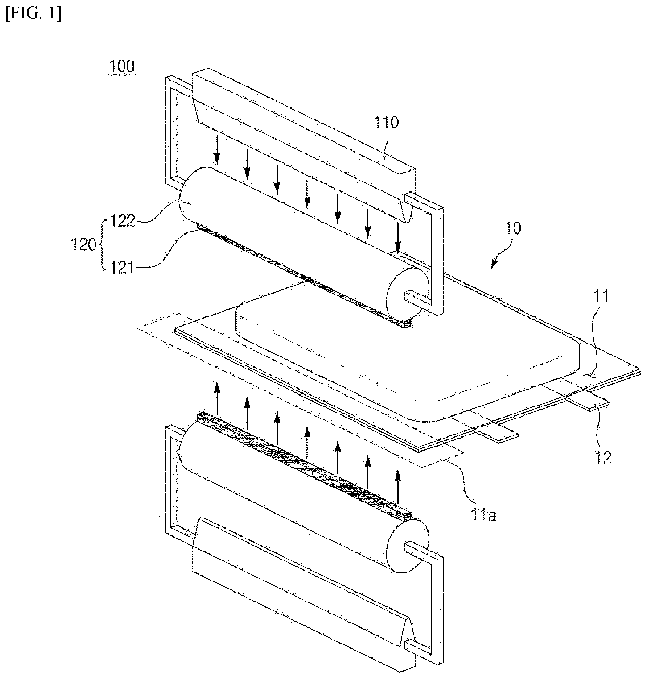

FIG. 1 is a perspective view schematically illustrating the main configuration of a sealing device according to the present invention. The following will be described in more detail with reference to FIG. 1.

The sealing device 100 for the pouch-type secondary battery includes a pressurizing part 120 located on the sealing part 11a of the pouch-type case 11 to heat and pressurize the sealing part 11a, and a light source part 110 to irradiate light to heat the pressurizing part 120.

In this case, the light source part 110 plays a role in heating the pressurizing part 120. To this end, the light source part 110 may irradiate the pressurizing part 120 with light, and the irradiated light may be a laser in the form of a beam. For example, the light may be light formed by a laser diode, and the emitted light may be an infrared laser, specifically an infrared laser with a wavelength of 750 nm to 1,000 nm; or an infrared laser with a wavelength of 800 nm to 980 nm.

In addition, the infrared laser emitted from the light source part 110 may be irradiated at any one point among either the upper part and lower part of the sealing part 11a to be sealed, or may be irradiated at both the upper part and lower part of the sealing part 11a. The former case has the advantage of lower equipment costs compared to the latter case, and of avoiding possible damage to the laser diodes on opposite sides. The latter case has the advantage of using two light source parts 110 on both sides centered on the sealing part 11a, so that the melting of the sealant layer can be effectively achieved with less time required.

Furthermore, the light source part 110 may be provided in plurality on the other side of the side where the pressurizing part 120 pressurizes the sealing part 11a of the pouch-type case, and the pressurizing part 120 and the light source part 110 may be disposed on the same line on the sealing part 11a of the pouch-type case. In this case, even if the light source part 110 and the pressurizing part 120 are spaced apart from each other, the loss of the infrared laser emitted by the pressurizing part 120 can be minimized.

In addition, the light emitted from the light source part 110 is transmitted to the pressurizing part 120, and the light transmitted to the pressurizing part 120 can be concentrated to heat the sealing part 11a of the pouch-type case.

More specifically, the pressurizing part 120 may operate by pressurizing the sealing part 11a of the pouch-type case to maintain the sealant layers on the inside of the pouch-type case in a state of increased mutual adhesion, and in this state, the light source part 110 may heat the pressurizing part 120 by emitting an infrared laser.

Since this method irradiates infrared light while maintaining a pressurized state, the sealant layer on the inside of the pouch-type case can be irradiated with high precision to effectively form the sealing part 11a, and the coupling force of the sealing part 11a can be further increased.

In this case, the pressurizing part 120 includes a sealing unit 121 for heat compressing in contact with the sealing part 11a of the pouch-type case; and a lens unit 122 positioned between the light source part 110 and the sealing unit 121 to concentrate light irradiated from the light source part 110 into the sealing unit 121.

The sealing unit 121 performs the function of pressurizing the sealing part 11a of the pouch-type case while transferring heat caused by the infrared laser concentrated through the lens unit 122 to the sealing part 11a for heating. To this end, the sealing unit 121 may have a flat plate shape arranged along the sealing part 11a of the pouch-type case, but it may also have a structure capable of preventing dispersion of the light source part inside the sealing unit 121 to prevent energy loss due to dispersion of the infrared laser, etc.

In addition, the lens unit 122 may be mounted on one side of the sealing unit 121 to expand the irradiation range of the infrared laser irradiated by the light source part 110, and may serve to concentrate the incident light on the sealing unit 121.

To this end, the lens unit 122 may be integrally formed with the sealing unit 121 but positioned between the light source part 110 and the sealing unit 121 along the path of the infrared laser. The lens unit 122 may refract and/or reflect the infrared laser emitted from the light source part 110 and guide it to the sealing unit 121.

Moreover, the lens unit 122 may have a convex shape on the side facing the sealing unit 121, and may preferably include a cylindrical lens with a side attached along the sealing unit 121.

Furthermore, the pressurizing part 120 may include a first light transmitting material satisfying Formula 1 in order to concentrate the incident light from the light source part 110 onto the sealing part 11a of the pouch-type case, but to concentrate it uniformly on the front of the sealing part 11a while minimizing the energy loss thereof:

[Formula 1] 15≤TC₁ₛₜ/RI₁ₛₜ≤35

in Formula 1,
TC₁ₛₜ represents a thermal conductivity (unit: W/m·K) of the first light transmitting material,
RI₁ₛₜ represents a refractive index of a light of the first light transmitting material with a wavelength of 980 nm.

Formula 1 shows the ratio of the thermal conductivity of the first light transmitting material to its refractive index for light having a wavelength of 980 nm. The infrared laser concentrated in the pressurizing part 120 is transmitted to the sealing part 11a of the pouch-type case in the form of thermal energy, and the energy conservation of the first light transmitting material can be inferred by reflecting the refractive index of light rather than the light transmissivity to the infrared laser. In other words, Formula 1 can indirectly indicate the energy conservation of the first light transmitting material to the infrared laser. The pressurizing part according to the present invention may include a first light transmitting material satisfying Formula 1 as 15 to 35 (i.e., 15≤ TC₁ₛₜ/RI₁ₛₜ≤35), more specifically, Formula 1 as 15 to 35 (i.e., 15≤ TC₁ₛₜ/RI₁ₛₜ ≤35); 15 to 30 (i.e., 15≤ TC₁ₛₜ/RI₁ₛₜ≤30); 20 to 35 (i.e., 20≤ TC₁ₛₜ/RI₁ₛₜ≤35); 20 to 30 (i.e., 20≤ TC₁ₛₜ/RI₁ₛₜ≤30); or 20 to 25 (i.e., 20≤ TC₁ₛₜ/RI₁ₛₜ≤25).

In addition, the first light transmitting material may have a refractive index of 1.45 to 1.9 for light having a wavelength of 980 nm, more specifically, a refractive index of 1.45 to 1.85; 1.55 to 1.85; 1.65 to 1.85; or 1.75 to 1.85 for light having a wavelength of 980 nm.

By satisfying the conditions of Formula 1, the first light transmitting material can minimize the energy loss of the infrared laser incident from the light source part 110, and can apply heat uniformly to the sealing part 11a of the pouch-type case. Furthermore, the residual heat in the sealing portion can be quickly dissipated, and thus the sealing thickness of the sealing part 11a can be uniformly formed.

Moreover, the first light transmitting material may exhibit a Mohs hardness in a particular range. Specifically, the first light transmitting material may have a Mohs hardness of 8.0 or more, more specifically, 8.5 or more; or 9.0 or more. By satisfying the above Mohs hardness, the first light transmitting material according to the present invention can prevent breakage under heating and pressurization conditions, thereby preventing damage to the sealing part 11a due to breakage of the pressurizing part 120 when sealing the sealing part 11a of the pouch-type case.

Meanwhile, the pressurizing part 120 may include a first light transmitting material, and in some cases, the first light transmitting material is included in a sealing unit 121 of the pressurizing part 120 that requires high thermal energy transfer efficiency and hardness, and the lens unit 122 attached to the sealing unit 121 may include one or more of the first light transmitting material and the second light transmitting material.

Specifically, the lens unit 122 may be made of a first light transmitting material, and in some cases may be made of a second light-transmitting material alone or in combination, as a relatively low thermal conductivity is required compared to the sealing unit 121.

Since the lens unit 122 performs a function of concentrating incident light on the sealing unit 121 through the entire surface of the lens unit 122 as mentioned above, a relatively high light transmittance may be required compared to the sealing unit 121, whereas a low thermal conductivity may be required. Therefore, the lens unit 122 may include a second light transmitting material having a relatively low thermal conductivity and light refractive index compared to the first light transmitting material, and the second light transmitting material may satisfy Formula 2 below:

[Formula 2] 0.5≤TC_{2nd}/RI_{2nd}≤2

in Formula 2,
TC_{2nd} represents a thermal conductivity (unit: W/m·K) of the second light transmitting material,
RI_{2nd} represents a refractive index of a light of the second light transmitting material with a wavelength of 980 nm.

Formula 2 shows the ratio of the thermal conductivity of the second light transmitting material to its refractive index for light having a wavelength of 980 nm. The infrared laser concentrated by the pressurizing part 120 is transmitted to the sealing part 11a of the pouch-type case in the form of heat energy, and the energy conservation of the second light transmitting material can be inferred by reflecting the refractive index of light rather than the light transmissivity to the infrared laser. In other words, Formula 2 can indirectly represent the energy conservation of the second light transmitting material for the infrared laser.

The pressurizing part according to the invention may include a second light transmitting material satisfying Formula 2 as 0.5 to 2 (i.e., 0.5≤ TC_{2nd}/RI_{2nd}≤2), and more specifically, a second light transmitting material satisfying Formula 2 as 0.5 to 1.9 (i.e., 0.5≤ TC_{2nd}/RI_{2nd}≤1.9); 0.5 to 1.75 (i.e., 0.5≤ TC_{2nd}/RI_{2nd}≤1.75); 0.5 to 1.5 (i.e., 0.5≤TC_{2nd}/RI_{2nd}≤1.5); or 0.5 to 1.35 (i.e., 0.5≤ TC_{2nd}/RI_{2nd}≤1.35).

In addition, the second light transmitting material may have a refractive index of 1.40 to 1.60 for light having a wavelength of 980 nm, and more specifically, may have a refractive index of 1.45 to 1.60; 1.45 to 1.55; or 1.50 to 1.55 for light having a wavelength of 980 nm. By satisfying the conditions of Formula 2, the second light transmitting material can concentrate the infrared laser incident from the light source part 110 to the sealing unit 121 with minimal energy loss.

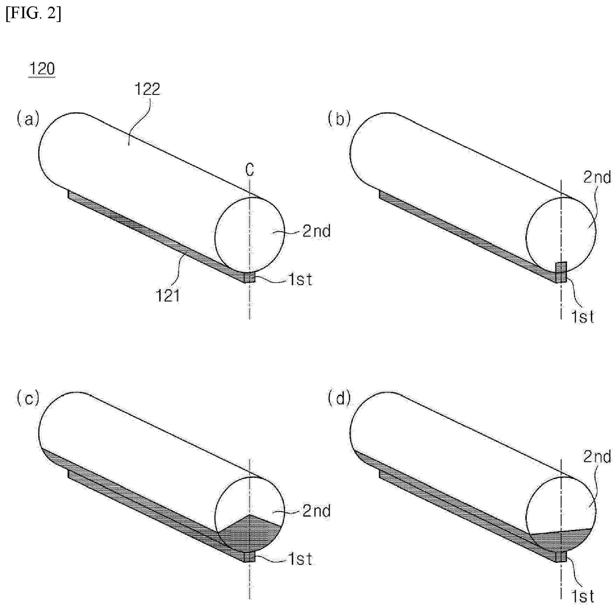

Furthermore, when the lens unit 122 includes a first light transmitting material and a second light transmitting material, it may include them to have a constant cross-sectional structure. Referring to FIG. 2(a)-(d), the lens unit 122 may include a first light transmitting material 1st and a second light transmitting material 2nd so as to be symmetrical with respect to a center line C including a cross-sectional center. In this case, the center line C is parallel to the pressurization direction of the sealing unit 121 and may include a center of the sealing unit 121.

In one example, the lens unit 122 may include only the second light transmitting material 2nd, as shown in FIG. 2(a), and the first light transmitting material 1st and the second light transmitting material 2nd may be arranged so as to be symmetrical with respect to the center line C, as shown in Fig. 2(b) to 2(d).

By configuring the cross-sectional structure of the first light transmitting material and the second light transmitting material 2nd constituting the lens unit 122 to be symmetrical with respect to the center line C of the lens unit 122, the present invention can maximize the thermal energy of the infrared laser focused on the sealing unit 121, and can further increase the processability and economy of the lens unit 122 compared to a case in which the lens unit 122 is constituted by the first light-transmitting material 1st having a high hardness alone. In addition, depending on the cross-sectional structure of the first light transmitting material 1st and the second light transmitting material 2nd, the amount of energy concentrated on the sealing unit 121 can be adjusted, which has the advantage of being selectively applied depending on the type or size of the pouch-type case used in manufacturing the secondary battery.

Meanwhile, the first light transmitting material 1st and the second light transmitting material 2nd can be applied without being particularly limited if they satisfy the conditions of Formula 1 and Formula 2, respectively, described above. Specifically, the first light transmitting material 1st and the second light transmitting material 2nd can be germanium, silicon, zinc sulfide, magnesium fluoride, sapphire, glass, quartz, and the like.

In one example, the first light transmitting material can include sapphire (TC/RI: 22.2~25.7, refractive index: 1.75-1.8, Mohs hardness: 9), and the second light transmitting material can include quartz (TC/RI: 0.65-1.33, refractive index: 1.5-1.55, Mohs hardness: 6).

By having the above-described configuration, the sealing device for a pouch-type secondary battery according to the present invention can not only heat and seal the sealing part of the pouch-type case uniformly, but also prevent the breakage of the sealing unit heated to a high temperature during sealing, so that the quality of the secondary battery can be improved, and at the same time have the advantage of improving processability and economy.

### Manufacturing method of a pouch-type secondary battery

In addition, in an exemplary embodiment,
the present invention provides a method for manufacturing a secondary battery using the above-described sealing device for a pouch-type secondary battery.

The manufacturing method of the secondary battery according to the present invention has the advantage of improving the quality of the manufactured secondary battery by utilizing the sealing device of the present invention described above for sealing, so that a uniform and solid sealing of the sealing part is possible.

Here, the method includes storing an electrode assembly and electrolyte in a pouch-type case comprising a laminated sheet including a metal layer and an inner sealant layer, and including a storing part for storing the electrode assembly and a sealing part surrounding the storing part; disposing the above-described sealing device of the present invention at at least one point among an upper part and a lower part of the sealing part of the pouch-type case; and sealing the sealing part of the pouch-type case by pressurizing it while irradiating light from the light source part of the sealing device to a pressurizing part.

First, storing the electrode assembly and the electrolyte in the pouch-type case may be performed in a manner conventional in the art as the step of storing the electrode assembly and the electrolyte, respectively, in the pouch-type case.

Here, the electrode assembly may be one among: a jelly roll type electrode assembly, wherein the electrode assembly is wound by stacking one or more negative electrodes, separators, and positive electrodes one after the other; a stack & folding type electrode assembly, wherein the unit cells with the negative electrodes, separators, and positive electrodes stacked one after the other are placed on a long film-like separator and then wound in a single direction; and a stack & folding electrode assembly wherein the unit cells with the negative electrodes, separators, and positive electrodes stacked one after the other are arranged in a long film-like separator and then wound in a zigzag direction.

**In** addition, the pouch-type case may be made of a metal layer including an aluminum layer, and a laminated sheet including an inner sealant layer.

Here, the metal layer serves to prevent air, moisture, and the like from entering the interior of the battery. The material used for the metal layer is not particularly limited as long as it is a material with good formability and ductility and can be heated by infrared radiation. For example, it can be made of an aluminum or an aluminum alloy material.

In addition, the inner sealant layer serves to provide sealing by being thermally fused to each other by applied heat and pressure with the electrode assembly embedded therein, and is mainly composed of casting polypropylene (CPP) film. An adhesive layer may be added between the outer resin layer and the metal layer and/or between the metal layer and the inner sealant layer, which serves to compensate for the low adhesion between the layers on both sides of the adhesive layer.

In addition, disposing the sealing device of the invention on the sealing part of the pouch-type case is performed by disposing the sealing device of the present invention on the upper part and/or lower part of the sealing part of the pouch-type case after the electrode assembly and electrolyte are stored in the pouch-type case.

In one example, the above step may be performed by disposing a sealing device on an upper part and lower part of the sealing part of the pouch-type case, respectively.

Furthermore, sealing the sealing part of the pouch-type case by pressurizing the sealing part is a step of sealing the sealing part, wherein light irradiation from a light source part of the sealing device disposed on the sealing part to the pressurizing part and pressurization of the sealing part of the pouch-type case may be performed simultaneously, and in some cases, light irradiation to the pressurizing part may be performed after pressurization of the sealing part of the pouch-type case.

Here, the light source part may emit an infrared laser to the pressurizing part, and the infrared laser may have a wavelength of 750 nm to 1,000 nm, or may have a wavelength of 800 nm to 980 nm. If the wavelength of the infrared laser is too long, it may not be sufficient to induce heating of the barrier metal layer or melting of the sealant layer, or it may take a long time, and conversely, if the wavelength is too short, it is undesirable because high energy may cause rupture of the battery case or fire, etc.

In addition, the temperature at which the sealant layer is melted by the infrared laser irradiation may be from 180 to 300°C. A temperature outside the above temperature range is undesirable because it may not facilitate the formation of a substantially uniform sealing part due to insufficient melting or excessive melting.

Furthermore, the pressure at which the pressurizing part of the sealing device pressurizes the sealing part of the pouch-type case is preferably in the range of 0.1 to 5 MPa. In addition, the pressure applied to the sealing part of the pouch-type case may be adjusted by a pressure gauge (not shown) provided on the sealing device to apply a constant pressure to the front of the sealing part.

Hereinafter, the present invention will be described in more detail by way of examples and experimental examples.

However, the following examples and experimental examples are illustrative of the present invention, and the present invention is not limited to the following examples.

### Examples and Comparative Examples.

An electrode assembly and electrolyte were inserted into the pouch-type case, and the unsealed pouch cell with the electrode assembly and electrolyte inserted was fixed to the sealing device. At this time, a sealing device having a structure as shown in FIG. 1 was used. Then, an infrared laser with a wavelength of 980 nm was irradiated to the lens unit of the pressurizing part (power: 80 to 85 W/cm²) using the infrared diode of the light source part, and the sealing unit of the pressurizing part was used to pressurize the sealing part of the pouch-type case at 2 MPa and to seal the sealing part.

In this case, the sealing unit of the pressurizing part is composed of a first light transmitting material, and the lens unit of the pressurizing part is composed of at least one of the first light transmitting material and the second light transmitting material. In addition, the respective properties of the first light transmitting material and the second light transmitting material and the cross-sectional structure of the lens unit are adjusted as shown in Table 1 below.

**[Table 1]**

| | First Light Transmitting Material | | | Second Light Transmitting Material | Lens Unit Cross-Sectional Structure |
|---|---|---|---|---|---|
| | TC₁ₛₜ/RI₁ₛₜ | Refractive index | Mohs hardness | TC_{2nd}/RI_{2nd} | |
| Example 1 | 22.2 to 25.7 | 1.75 to 1.8 | 9.0 | 0.65 to 1.33 | in Figure 2(a) |
| Example 2 | 22.2 to 25.7 | 1.75 to 1.8 | 9.0 | 0.65 to 1.33 | in Figure 2(c) |
| Comparative Example 1 | 0.65 to 1.33 | 1.50 to 1.55 | 6.0 | 0.65 to 1.33 | in Figure 2(a) |

### Experimental Examples.

To confirm the performance of the sealing device according to the present invention, the sealing quality of the sealing part was evaluated on pouch-type secondary batteries sealed in the Examples and Comparative Examples.

Specifically, the thickness of 10 random points of the sealing part were measured to confirm whether the sealing part of the pouch-type case is uniformly and tightly sealed. From the measured values, the average value was calculated and the error rate of the point with the largest error was calculated based on the average value. The results are shown in Table 2 below.

**[Table 2]**

| | Maximum error rate based on average value |
|---|---|
| Example 1 | Approx. 4% |
| Example 2 | Approx. 2% |
| Comparative Example 1 | Approx. 10% |

As shown in Table 2 above, it can be seen that the sealing device for a pouch-type secondary battery according to the present invention is capable of uniformly and securely sealing the sealing part of the pouch-type case.

Specifically, the secondary battery of the example using the sealing unit of the pressurizing part with a light transmitting material satisfying the conditions of Formula 1 was confirmed to have a maximum error rate of less than 5% based on the average thickness of the sealing part due to uniform sealing of the sealing part.

However, the secondary battery of the comparative example using a sealing device with a light transmitting material applied that does not satisfy Formula 1 was found to have a maximum error rate of more than 10% based on the average thickness of the sealing part due to uneven sealing of the sealing part.

From these results, it can be seen that the sealing device according to the present invention and the manufacturing method of a secondary battery using it can not only seal the sealing part of the pouch-type case uniformly, but also prevent the breakage of the sealing unit heated to a high temperature during sealing, so that the quality of the secondary battery can be improved, and at the same time, the processability and economy can be improved.

While the foregoing has been described with reference to preferred examples of the present invention, it will be understood by those skilled in the art or having ordinary knowledge of the art that various modifications and changes can be made to the present invention without departing from the field of thought and technology of the present invention described in the patent claims that will follow.

Accordingly, the technical scope of the present invention is not limited to what is described in the detailed description of the specification, but should be determined by the claims of the patent.

### [Reference numerals]

| | | | |
|---|---|---|---|
| 10: | POUCH-TYPE SECONDARY BATTERY | 11: | POUCH-TYPE CASE |
| 11a: | SEALING PART | 12: | ELECTRODE LEAD |
| 100: | SEALING DEVICE | 110: | LIGHT SOURCE PART |
| 120: | PRESSURIZING PART | 121: | SEALING UNIT |
| 122: | LENS UNIT | | |

## Claims

1. A sealing device (100) for a pouch-type secondary battery (10) comprising:
a pressurizing part (120) configured to contact at least an upper surface or a lower surface of a sealing part (11a) of a pouch-type case (11); and
a light source part (110) for irradiating light to the pressurizing part (120),
wherein the pressurizing part (120) is made of a material through which light irradiated from the light source part (110) is transmissible and comprises a first light transmitting material satisfying Formula 1 below:
[Formula 1] 15≤TC₁ₛₜ/RI₁ₛₜ≤35
in Formula 1,
TC₁ₛₜ represents a thermal conductivity (unit: W/m·K) of the first light transmitting material,
RI₁ₛₜ represents a refractive index of a light of the first light transmitting material with a wavelength of 980 nm,
**characterized in that**
the pressurizing part (120) comprises a sealing unit (121) that heats and pressurizes the sealing part (11a) of the pouch-type case (11) by contacting the sealing part (11a) of the pouch-type case (11); and a lens unit (122) positioned between the light source part (110) and the sealing unit (121) to concentrate light irradiated from the light source part (110) into the sealing unit (121),
wherein the sealing unit (121) comprises the first light transmitting material.

2. The sealing device (100) for a pouch-type secondary battery (10) of claim 1, wherein the first light transmitting material has a refractive index of 1.45 to 1.9 for a light having a wavelength of 980 nm.

3. The sealing device (100) for a pouch-type secondary battery (10) of claim 1, wherein the first light transmitting material has a Mohs hardness of 8.0 or greater.

4. The sealing device (100) for a pouch-type secondary battery (10) of claim 1, wherein the lens unit (122) comprises one or more among the first light transmitting material and a second light transmitting material, and
wherein the second light transmitting material satisfies Formula 2:
[Formula 2] 0.5≤TC_{2nd}/RI_{2nd}≤2
in Formula 2,
TC_{2nd} represents a thermal conductivity (unit: W/m·K) of the second light transmitting material,
RI_{2nd} represents a refractive index of a light of the second light transmitting material with a wavelength of 980 nm.

5. The sealing device (100) for a pouch-type secondary battery (10) of claim 4, wherein the second light transmitting material has a refractive index of 1.40 to 1.60 for light having a wavelength of 980 nm.

6. The sealing device (100) for a pouch-type secondary battery (10) of claim 1, wherein the lens unit (122) is a cylinder lens.

7. The sealing device (100) for a pouch-type secondary battery (10) of claim 1, wherein the lens unit (122) comprises the first light transmitting material and a second light transmitting material, and
wherein the first light transmitting material and the second light transmitting material have a structure that is symmetrical with respect to a center line including a cross-sectional center of the lens unit (122).

8. The sealing device (100) for a pouch-type secondary battery (10) of claim 1, wherein the light source part (110) irradiates light having a wavelength of 750 nm to 1,000 nm.

9. A manufacturing method of a pouch-type secondary battery (10) using the sealing device (100) according to any of claims 1 to 8 comprising:
storing an electrode assembly and electrolyte in a pouch-type case (11) comprising a laminated sheet including a metal layer and an inner sealant layer, and including a storing part for storing an electrode assembly and a sealing part (11a) surrounding the storing part;
disposing the sealing device (100) according to claim 1 on at least one point among an upper part and a lower part of a sealing part (11a) of the pouch-type case (11); and
sealing the sealing part (11a) of the pouch-type case (11) by pressurizing it while irradiating light from the light source part (110) of the sealing device (100) to a pressurizing part (120).

## Patentansprüche

1. Dichtungsvorrichtung (100) für eine beutelartige Sekundärbatterie (10), umfassend:
ein Druckbeaufschlagungsteil (120), das konfiguriert ist, um mindestens eine obere Oberfläche oder eine untere Oberfläche eines Dichtungsteils (11a) eines beutelartigen Gehäuses (11) zu berühren; und
ein Lichtquellenteil (110) zum Ausstrahlen von Licht auf das Druckbeaufschlagungsteil (120),
wobei das Druckbeaufschlagungsteil (120) aus einem Material hergestellt ist, durch das von dem Lichtquellenteil (110) ausgestrahltes Licht übertragbar ist, und ein erstes lichtdurchlässiges Material umfasst, das die nachstehende Formel 1 erfüllt:
[Formel 1] 15≤TC₁ₛₜ/RI₁ₛₜ≤35
wobei in Formel 1,
TC₁ₛₜ eine Wärmeleitfähigkeit (Einheit: W/m·K) des ersten lichtdurchlässigen Materials darstellt,
RI1st einen Brechungsindex eines Lichts des ersten lichtdurchlässigen Materials bei einer Wellenlänge von 980 nm darstellt,
**dadurch gekennzeichnet, dass**
das Druckbeaufschlagungsteil (120) eine Dichtungseinheit (121) umfasst, die das Dichtungsteil (11a) des beutelartigen Gehäuses (11) durch Berühren des Dichtungsteils (11a) des beutelartigen Gehäuses (11) erwärmt und unter Druck setzt; und eine Linseneinheit (122), die zwischen dem Lichtquellenteil (110) und der Dichtungseinheit (121) positioniert ist, um von dem Lichtquellenteil (110) ausgestrahltes Licht in die Dichtungseinheit (121) zu konzentrieren,
wobei die Dichtungseinheit (121) das erste lichtdurchlässige Material umfasst.

2. Dichtungsvorrichtung (100) für eine beutelartige Sekundärbatterie (10) nach Anspruch 1, bei der das erste lichtdurchlässige Material einen Brechungsindex von 1,45 bis 1,9 für ein Licht mit einer Wellenlänge von 980 nm aufweist.

3. Dichtungsvorrichtung (100) für eine beutelartige Sekundärbatterie (10) nach Anspruch 1, bei der das erste lichtdurchlässige Material eine Mohs-Härte von 8,0 oder mehr aufweist.

4. Dichtungsvorrichtung (100) für eine beutelartige Sekundärbatterie (10) nach Anspruch 1, bei der die Linseneinheit (122) eines oder mehrere von dem ersten lichtdurchlässigen Material und einem zweiten lichtdurchlässigen Material umfasst, und
wobei das zweite lichtdurchlässige Material die Formel 2 erfüllt:
[Formel 2] 0,5 ≤ TC_{2nd}/RI_{2nd} ≤ 2
wobei in Formel 2,
TC_{2nd} eine Wärmeleitfähigkeit (Einheit: W/m·K) des zweiten lichtdurchlässigen Materials darstellt,
RI_{2nd} einen Brechungsindex eines Lichts des zweiten lichtdurchlässigen Materials bei einer Wellenlänge von 980 nm darstellt.

5. Dichtungsvorrichtung (100) für eine beutelartige Sekundärbatterie (10) nach Anspruch 4, bei der das zweite lichtdurchlässige Material einen Brechungsindex von 1,40 bis 1,60 für Licht mit einer Wellenlänge von 980 nm aufweist.

6. Dichtungsvorrichtung (100) für eine beutelartige Sekundärbatterie (10) nach Anspruch 1, bei der die Linseneinheit (122) eine Zylinderlinse ist.

7. Dichtungsvorrichtung (100) für eine beutelartige Sekundärbatterie (10) nach Anspruch 1, bei der die Linseneinheit (122) das erste lichtdurchlässige Material und ein zweites lichtdurchlässiges Material umfasst, und
wobei das erste lichtdurchlässige Material und das zweite lichtdurchlässige Material eine Struktur aufweisen, die in Bezug auf eine Mittellinie, die eine Querschnittsmitte der Linseneinheit (122) enthält, symmetrisch ist.

8. Dichtungsvorrichtung (100) für eine beutelartige Sekundärbatterie (10) nach Anspruch 1, bei der das Lichtquellenteil (110) Licht mit einer Wellenlänge von 750 nm bis 1.000 nm ausstrahlt.

9. Herstellungsverfahren für eine beutelartige Sekundärbatterie (10) unter Verwendung der Dichtungsvorrichtung (100) nach einem der Ansprüche 1 bis 8, umfassend:
Aufbewahren einer Elektrodenanordnung und eines Elektrolyten in einem beutelartigen Gehäuse (11), das eine laminierte Folie umfasst, die eine Metallschicht und eine innere Dichtungsschicht enthält, und ein Aufbewahrungsteil zum Aufbewahren einer Elektrodenanordnung und ein Dichtungsteil (11a), das das Aufbewahrungsteil umgibt, enthält;
Anordnen der Dichtungsvorrichtung (100) nach Anspruch 1 an mindestens einem Punkt zwischen einem oberen Teil und einem unteren Teil eines Dichtungsteils (11a) des beutelartigen Gehäuses (11); und
Abdichten des Dichtungsteils (11a) des beutelartigen Gehäuses (11), indem es unter Druck gesetzt wird, während Licht von dem Lichtquellenteil (110) der Dichtungsvorrichtung (100) auf ein Druckbeaufschlagungsteil (120) ausgestrahlt wird.

## Revendications

1. Dispositif d'étanchéité (100) pour une batterie rechargeable de type poche (10) comprenant :
une partie de mise sous pression (120) configurée pour être en contact avec au moins une surface supérieure ou une surface inférieure d'une partie d'étanchéité (11a) d'un boîtier de type poche (11) ; et
une partie de source de lumière (110) qui irradie de la lumière vers la partie de mise sous pression (120),
dans lequel la partie de mise sous pression (120) est fabriquée en un matériau à travers lequel la lumière irradiée depuis la partie de source de lumière (110) est transmissible et comprend un premier matériau de transmission de lumière satisfaisant à la Formule 1 ci-dessous :
[Formule 1] 15≤TC₁ₑᵣ/RI₁ₑᵣ≤35
dans la Formule 1,
TC₁ₑᵣ représente une conductivité thermique (unité : W/m·K) du premier matériau de transmission de lumière,
RI₁ₑᵣ représente un indice de réfraction d'une lumière du premier matériau de transmission de lumière ayant une longueur d'onde de 980 nm,
**caractérisé en ce que**
la partie de mise sous pression (120) comprend une partie d'étanchéité (121) qui chauffe et pressurise la partie d'étanchéité (11a) du boîtier de type poche (11) en étant en contact avec la partie d'étanchéité (11a) du boîtier de type poche (11) ; et une partie de lentille (122) positionnée entre la partie de source de lumière (110) et la partie d'étanchéité (121) qui concentre la lumière irradiée depuis la partie de source de lumière (110) dans la partie d'étanchéité (121),
dans lequel la partie d'étanchéité (121) comprend le premier matériau de transmission de lumière.

2. Dispositif d'étanchéité (100) pour une batterie rechargeable de type poche (10) selon la revendication 1, dans lequel le premier matériau de transmission de lumière a un indice de réfraction de 1,45 à 1,9 pour une lumière ayant une longueur d'onde de 980 nm.

3. Dispositif d'étanchéité (100) pour une batterie rechargeable de type poche (10) selon la revendication 1, dans lequel le premier matériau de transmission de lumière a une dureté de Mohs supérieure ou égale à 8,0.

4. Dispositif d'étanchéité (100) pour une batterie rechargeable de type poche (10) selon la revendication 1, dans lequel la partie de lentille (122) comprend un ou plusieurs matériaux parmi le premier matériau de transmission de lumière et un deuxième matériau de transmission de lumière, et
dans lequel le deuxième matériau de transmission de lumière satisfait à la Formule 2 :
[Formule 2] 0,5≤TC_{2ème}/RI_{2ème}≤2
dans la Formule 2,
TC_{2ème} représente une conductivité thermique (unité : W/m·K) du deuxième matériau de transmission de lumière,
RI_{2ème} représente un indice de réfraction d'une lumière du deuxième matériau de transmission de lumière ayant une longueur d'onde de 980 nm.

5. Dispositif d'étanchéité (100) pour une batterie rechargeable de type poche (10) selon la revendication 4, dans lequel le deuxième matériau de transmission de lumière a un indice de réfraction de 1,40 à 1,60 pour une lumière ayant une longueur d'onde de 980 nm.

6. Dispositif d'étanchéité (100) pour une batterie rechargeable de type poche (10) selon la revendication 1, dans lequel la partie de lentille (122) est une lentille cylindrique.

7. Dispositif d'étanchéité (100) pour une batterie rechargeable de type poche (10) selon la revendication 1, dans lequel la partie de lentille (122) comprend le premier matériau de transmission de lumière et un deuxième matériau de transmission de lumière, et
dans lequel le premier matériau de transmission de lumière et le deuxième matériau de transmission de lumière ont une structure qui est symétrique par rapport à une ligne centrale incluant un centre transversal de la partie de lentille (122).

8. Dispositif d'étanchéité (100) pour une batterie rechargeable de type poche (10) selon la revendication 1, dans lequel la partie de source de lumière (110) irradie de la lumière ayant une longueur d'onde de 750 nm à 1000 nm.

9. Procédé de fabrication d'une batterie rechargeable de type poche (10) utilisant le dispositif d'étanchéité (100) selon l'une quelconque des revendications 1 à 8 consistant à :
stocker un ensemble électrode et un électrolyte dans un boîtier de type poche (11) comprenant une feuille stratifiée incluant une couche métallique et une couche d'étanchéité interne, et incluant une partie de stockage qui stocke un ensemble électrode et une partie d'étanchéité (11a) entourant la partie de stockage ;
disposer le dispositif d'étanchéité (100) selon la revendication 1 sur au moins un point parmi une partie supérieure et une partie inférieure d'une partie d'étanchéité (11a) du boîtier de type poche (11) ; et
sceller la partie d'étanchéité (11a) du boîtier de type poche (11) en la pressurisant tout en irradiant la lumière de la partie de source de lumière (110) du dispositif d'étanchéité (100) à une partie de mise sous pression (120).
